# EUROPÄISCHE PATENTSCHRIFT

(11) **EP 3 732 954 B1**
(45) Veröffentlichungstag und Bekanntmachung des Hinweises auf die Patenterteilung: **17.05.2023**
(21) Anmeldenummer: 20151419.7
(22) Anmeldetag: 13.01.2020
(51) Int. Cl.: A01F 7/06, A01F 12/10

(54) **ABSCHEIDEVORRICHTUNG**
SEPARATING DEVICE
DISPOSITIF DE SÉPARATION

(30) Priorität: 29.04.2019 DE 102019110990
(43) Veröffentlichungstag der Anmeldung: 04.11.2020
(73) Patentinhaber: CLAAS Selbstfahrende Erntemaschinen GmbH, 33428 Harsewinkel (DE)
(72) Erfinder: Pellmann, Markus, 48336 Sassenberg (DE); Bußmann, Jens, 49179 Ostercappeln (DE); Holtmann, Bernd, 48324 Sendenhorst (DE)
(74) Vertreter: CLAAS Gruppe

(56) Entgegenhaltungen:
- EP-A1- 3 000 308
- EP-A1- 3 031 316
- EP-B1- 2 965 614
- CN-U- 205 166 048
- US-A1- 2007 251 368
- US-A1- 2007 261 867
- US-A1- 2016 309 648

## Beschreibung

Die vorliegende Erfindung betrifft eine Abscheidevorrichtung gemäß dem Oberbegriff des Anspruches 1. Weiterhin betrifft die vorliegende Erfindung einen Mähdrescher mit einer Abscheidevorrichtung.

Eine Abscheidevorrichtung sowie ein Mähdrescher mit einer Abscheidevorrichtung sind aus der EP 2 965 614 B1 bekannt. Die Abscheidevorrichtung umfasst ein Einlaufkopfgehäuse, eine Zuführtrommel sowie zwei Axialabscheiderotoren, die mit einem Ende abschnittsweise in das Einlaufkopfgehäuse hineinragen. Die Zuführung des Erntegutes erfolgt durch die tangential fördernde Zuführtrommel, die oberhalb des Einlaufabschnittes vor den Öffnungen der Axialabscheiderotoren angeordnet ist. Das Einlaufkopfgehäuse weist jeweils einen sich über die Breite des jeweiligen Axialabscheiderotors erstreckenden flächigen Einlaufabschnitt auf, zwischen denen ein rampenförmiger, sich achsparallel zur Förderrichtung der Axialabscheiderotoren erstreckender Gehäuseabschnitt angeordnet ist, welcher die Aufteilung eines von der Zuführtrommel zugeführten Erntegutstromes, der hauptsächlich aus Halmen, Stängeln oder dergleichen besteht, in den Axialabscheiderotoren zuzuführende Teilströme unterstützt. Auf dem rampenförmigen Gehäuseabschnitt ist zumindest ein aus einem ersten Material bestehendes Trennelement angeordnet, welches sich abschnittsweise in Umfangsrichtung der Zuführtrommel erstreckt. Der in vertikaler Richtung ansteigende rampenförmige Gehäuseabschnitt und das darauf angeordnete Trennelement weisen ein konkaves Profil auf und dienen der Unterstützung bei der Auftrennung bzw. Aufteilung des zugeführten Erntegutes, um eine gleichmäßige Beschickung der Axialabscheiderotoren mit Erntegut zu erreichen. Dabei wirkt das Trennelement als ein Schneidmesser auf das überströmende Erntegut ein, d.h. es durchtrennt bzw. zerschneidet dieses beim Passieren des Trennelementes. Die Standzeit insbesondere des Trennelementes, welches abschnittsweise in den Erntegutstrom hineinragt, ist wegen der abrasiven Wirkung des überströmenden Erntegutes limitiert.

Somit ist es Aufgabe der vorliegenden Erfindung, eine Abscheidevorrichtung der eingangs genannten Art weiterzubilden, die sich durch eine höhere Standzeit auszeichnet.

Diese Aufgabe wird erfindungsgemäß durch eine Abscheidevorrichtung gemäß dem unabhängigen Anspruch 1 gelöst.

Vorteilhafte Weiterbildungen sind Gegenstand der Unteransprüche.

Gemäß dem Anspruch 1 wird eine Abscheidevorrichtung vorgeschlagen, umfassend ein Einlaufkopfgehäuse, eine Zuführtrommel sowie zwei Axialabscheiderotoren, die mit einem Ende abschnittsweise in das Einlaufkopfgehäuse hineinragen, wobei das Einlaufkopfgehäuse jeweils einen sich über die Breite des jeweiligen Axialabscheiderotors erstreckenden flächigen Einlaufabschnitt aufweist, zwischen denen ein rampenförmiger, sich achsparallel zur Förderrichtung der Axialabscheiderotoren erstreckender Gehäuseabschnitt angeordnet ist, welcher eine Aufteilung eines von der Zuführtrommel zugeführten Erntegutstromes in den Axialabscheiderotoren zuzuführende Teilströme unterstützt, wobei dem rampenförmigen Gehäuseabschnitt zumindest ein aus zumindest einem ersten Material bestehendes Trennelement zugeordnet ist, wobei das zumindest eine Trennelement einen Grundkörper, der sich senkrecht zur Oberfläche des Gehäuseabschnitts erstreckt, und eine abschnittsweise als Schneide ausgebildete Stirnfläche aufweist, wobei auf der Stirnfläche zumindest abschnittsweise eine Beschichtung aus einem verschleißfesteren zweiten Material angeordnet ist, die im Wesentlichen mittig in Längsrichtung der Stirnfläche verläuft. Die Aufbringung der Beschichtung erfolgt dabei im Wesentlichen als streifen- oder bandförmiger Abschnitt, dessen Breite geringer als die Gesamtbreite der Stirnfläche ist. Hierdurch wird erreicht, dass im laufenden Betrieb der Abscheidevorrichtung die zu der Beschichtung benachbarten Bereiche der Stirnfläche, die aus dem ersten Material bestehen, einem größeren Verschleiß ausgesetzt sind, d.h. stärker abgeschliffen werden. Daraus resultiert der Effekt einer symmetrischen, selbstschärfenden Schneidengeometrie. Weiterhin kann durch eine Variation des ersten Materials die Geometrie und/oder die Standzeit der Schneide beeinflusst werden. So kann beispielsweise die Verwendung eines weicheren ersten Materials für den Grundkörper zu einer spitzeren Schneide führen, da sich die seitlich neben der Schneide befindliche Flächen schneller verschleißen als die Stirnfläche, die zumindest abschnittsweise mit einer Beschichtung aus dem verschleißfesteren zweiten Material versehen ist.

Insbesondere kann das Trennelement lösbar an dem Gehäuseabschnitt angeordnet sein. Hierdurch lässt sich ein einfacher Austausch oder ein einfaches Nachrüsten des Trennelementes erreichen.

Vorzugsweise kann das erste Material ein hochfester Stahl und das zweite Material ein Metallmatrix-Verbundwerkstoff sein. Bei dem Metallmatrix-Verbundwerkstoff kann es sich beispielsweise um Wolframcarbid oder Wolframschmelzcarbid mit einer Matrix aus einer Eisenlegierung, einer Nickellegierung oder Nickel handeln.

Bevorzugt kann das Aufbringen der Beschichtung mittels Auftragschweißen erfolgen. Insbesondere kann das Aufbringen der Beschichtung mittels Laserauftragschweißen oder Plasma-Pulver-Auftragschweißen erfolgen. Besonders bevorzugt kann das Laserauftragsschweißen zur Anwendung kommen, da beim Laserauftragschweißen gegenüber dem konventionellen Auftragschweißen ein geringerer Wärmeeintrag in das zu beschichtende Trennelement erfolgt.

Insbesondere kann die Stirnfläche ein im Wesentlichen wellenförmiges Profil aufweisen. Alternativ kann die Stirnfläche ein im Wesentlichen sägezahnförmiges Profil aufweisen. In Abhängigkeit von der Ausgestaltung des Profils auf der Stirnfläche, welche die Schneide des Trennelementes ausbildet, lässt sich der Schneid- oder Trenneffekt beeinflussen. Aufgrund der Auswechselbarkeit kann das Trennelement in Abhängigkeit von dem zu verarbeitenden Erntegut ausgetauscht werden.

Bevorzugt kann sich die Beschichtung über die gesamte Längsausdehnung der Stirnfläche erstrecken. Dies ist unter anderem wegen fertigungstechnischer Aspekten vorteilhaft. Zudem wird dadurch eine durchgehende, verschleißresistente Schneidkante auf der Stirnfläche erzeugt.

Gemäß einer bevorzugten Ausführungsform kann die Stirnfläche ein im Wesentlichen gezacktes oder sägezahnförmiges Profil aufweisen, wobei das gezackte oder sägezahnförmige Profil aus wechselweise in Längsrichtung des Trennelementes verlaufenden im Wesentlichen horizontalen Abschnitten und im Wesentlichen senkrecht hierzu erstreckenden vertikalen Abschnitten gebildet ist. Gegenüber der wellenförmigen Ausgestaltung des Profils der Stirnfläche wirkt das gezackte oder sägezahnförmige Profil aggressiver auf das Erntegut ein.

Dabei kann die Beschichtung nur auf den sich im Wesentlichen senkrecht zu den horizontalen Abschnitten erstreckenden vertikalen Abschnitten aufgebracht sein. Der fertigungstechnische Aufwand bei der Beschichtung wird hierdurch reduziert. Es können nur die Stirnflächen der vertikalen Abschnitte des Trennelements beschichtet werden, welche entsprechen der Rotationsrichtung der Zuführtrommel mit dem zu fördernden Erntegutstrom trennend oder schneidend in Eingriff gebracht werden, so dass diese dem größten Verschleiß ausgesetzt sind. Die horizontalen Abschnitte unterliegen einem erheblich geringeren Verschleiß, so dass hier bei einer Auswahl eines geeigneten ersten Materials auch ohne deren Beschichtung mit dem zweiten Material eine hinreichende Standzeit erreichbar ist.

Weiterhin kann die Zuführtrommel im Bereich des rampenförmigen Gehäuseabschnittes mit mehreren in Umfangsrichtung hintereinander angeordneten Trennelementen versehen sein. Die Trennelemente sind in einem mittigen Bereich der Zuführtrommel angeordnet. Hierdurch lässt sich der Schneid- bzw. Trenneffekt durch ein Zusammenwirken mit dem an dem Gehäuseabschnitt angeordneten Trennelement verstärken.

Insbesondere können jeweils zwei Trennelemente der Zuführtrommel paarweise nebeneinander angeordnet sein, wobei die Trennelemente eines jeden Paares in Rotationsrichtung der Zuführtrommel aufeinander zulaufend angeordnet sind. Die sich durch die Anordnung ausbildende Keilform eines Paares der Trennelemente führt dazu, dass das Trennelement an dem Gehäuseabschnitt als Gegenmesser für die jeweilige Spitze des Paares der Trennelemente auf der rotierenden Zuführtrommel fungiert.

Weiterhin wird die Aufgabe durch einen Mähdrescher mit einer Abscheidevorrichtung gelöst, der dadurch gekennzeichnet ist, dass die Abscheidevorrichtung nach einem der vorangehenden Ansprüche ausgeführt ist. Die Abscheidevorrichtung kann als eine nach dem Axialflussprinzip arbeitende Trenneinrichtung vorgesehen sein, welcher eine nach dem Tangentialflussprinzip arbeitende Drescheinrichtung vorgeordnet ist. Ebenso kann eine Ausführung der Abscheidevorrichtung als eine nach dem Axialflussprinzip arbeitende Dresch- und Trenneinrichtung ausgeführt sein, bei welcher der Dreschprozess und der Trennprozess gemeinsam durch geeignet ausgeführte Axialabscheiderotoren durchgeführt wird.

Die vorliegende Erfindung wird nachstehend anhand eines in den Zeichnungen dargestellten Ausführungsbeispieles näher erläutert.

Es zeigen:
- Fig. 1: eine schematische Teilansicht eines selbstfahrenden Mähdreschers;
- Fig. 2: eine isometrische Ansicht eines Einlaufkopfgehäuses einer Abscheidevorrichtung;
- Fig. 3: eine isometrische Ansicht des Einlaufkopfgehäuse 17 gemäß Fig. 2 ohne Zuführtrommel;
- Fig. 4: schematisch eine perspektivische Ansicht eines Trennelements;
- Fig. 5: schematisch eine perspektivische Ansicht eines an der Zuführtrommel angeordneten Trennelements; und
- Fig. 6: schematisch eine perspektivische Ansicht einer weiteren Ausführungsform des Trennelements gemäß Fig. 5.

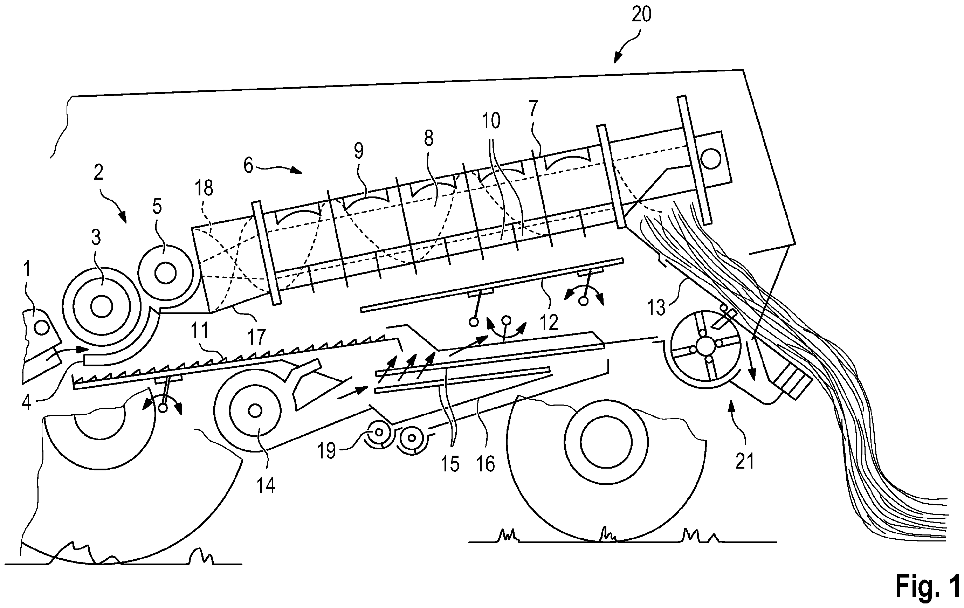

Die Darstellung in Fig. 1 zeigt eine schematische Teilansicht eines Mähdreschers 20. In dem nicht dargestellten vorderen Bereich des Mähdreschers 20 wird zu verarbeitendes Erntegut von einem Vorsatzgerät aufgenommen und von einer nur ansatzweise dargestellten als Schrägförderer ausgebildeten Fördereinrichtung 1 einer tangential wirkenden Drescheinrichtung 2 zugeführt. Die Drescheinrichtung 2 umfasst zumindest eine Dreschtrommel 3 mit quer zur Fahrrichtung des Mähdreschers 20 orientierter Achse, die auf einem Teil ihres Umfangs von einem Dreschkorb 4 umgeben ist. Ein Teilstrom des von der Drescheinrichtung 2 bearbeiteten Erntegutes gelangt durch Öffnungen in dem Dreschkorb 4 auf einen darunter befindlichen Förderboden 11.

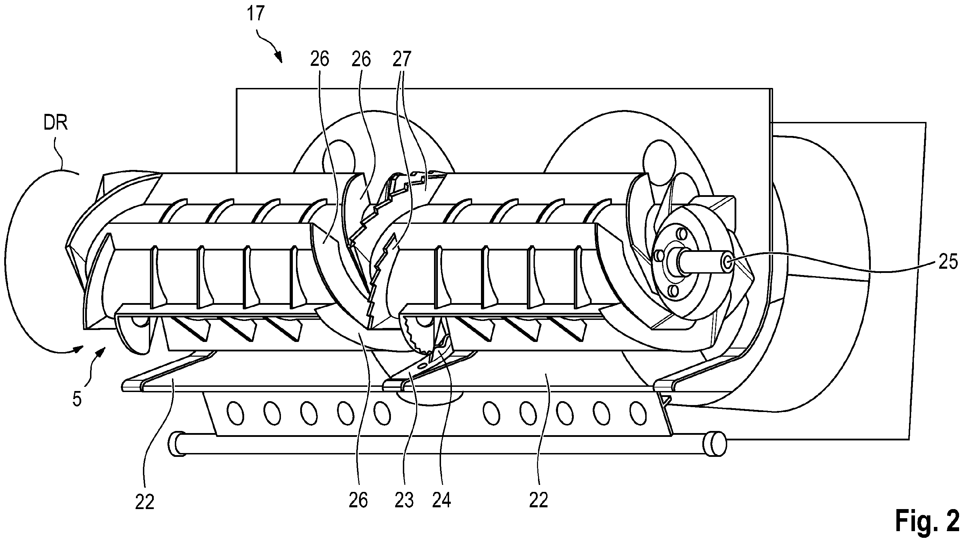

Ein größerer Teilstrom des Erntegutes wird jedoch zwischen Dreschtrommel 3 und Dreschkorb 4 hindurchgeführt und mit Unterstützung durch eine Leittrommel oder Zuführtrommel 5 einer nach dem Axialflussprinzip arbeitenden Abscheidevorrichtung 6 zugeführt. Die schematisiert dargestellte Abscheidevorrichtung 6 ist als zumindest ein zylindrisches, an seinen Enden offenes Gehäuse 7 ausgeführt, in dem über seine gesamte Länge zwei als Förderorgan ausgebildete Axialabscheiderotoren 8 rotierend antreibbar gelagert sind. Durch die gegenläufige Drehung der Axialabscheiderotoren 8 wird das Erntegut auf einer schraubenlinienförmigen Bahn durch die Abscheidevorrichtung 6 gefördert. Von einer Oberseite des Gehäuses 7 in dessen Inneres vorstehende Rippen 9 fördern das Durchkneten des Erntegutes, wenn der äußere Rand einer Wendel 18 des Axialabscheiderotors 8 an ihnen vorbeigeführt wird. Der untere Bereich des Gehäuses 7 ist durch Abscheidekörbe 10 gebildet. Das vordere Ende des Axialabscheiderotors 8 erstreckt sich in ein Einlaufkopfgehäuse 17, welches in Fig. 2 näher dargestellt ist.

Die Bestandteile des von der Abscheidevorrichtung 6 abgegebenen Teilstromes, im Wesentlichen Körner, Spreu und Kurzstroh, die durch Öffnungen in den Abscheidekörben 10 aus der Abscheidevorrichtung 6 ausgeschieden werden, fallen auf einen darunter befindlichen Förderboden 11 beziehungsweise einen Rücklaufboden 12.

Das während des Durchgangs durch die Abscheidevorrichtung 6 weitestgehend vom Korn befreite Grobstroh wird am rückseitigen Ende der Abscheidevorrichtung 6 ausgeworfen und fällt über eine Rutsche 13 auf den Boden oder wird einer Häcksel- und Verteilvorrichtung 21 zugeführt. Die Drescheinrichtung 2 und die Abscheidevorrichtung 6 bilden so eine erste Trennstufe oder Abscheidestufe.

Eine zweite Trennstufe oder Reinigungsstufe ist im Wesentlichen aufgebaut aus einem Gebläse 14 und einer im Windstrom des Gebläses 14 liegenden Gruppe von Siebböden 15, die in einem nicht dargestellten Rahmengestell oszillierend angetrieben sind, und mit dem vorgereinigten vom Förderboden 11 kommenden Teilstrom mit Erntegut beschickt werden. Das im vorgereinigten Teilstrom enthaltene Korn rieselt durch die schwingenden Siebböden 15 hindurch auf einen abschüssigen ersten Leitboden 16. Am unteren Ende des Leitbodens 16 ist eine Förderschnecke 19 angeordnet, die das Korn zu einem Elevator und durch diesen in einen Korntank fördert.

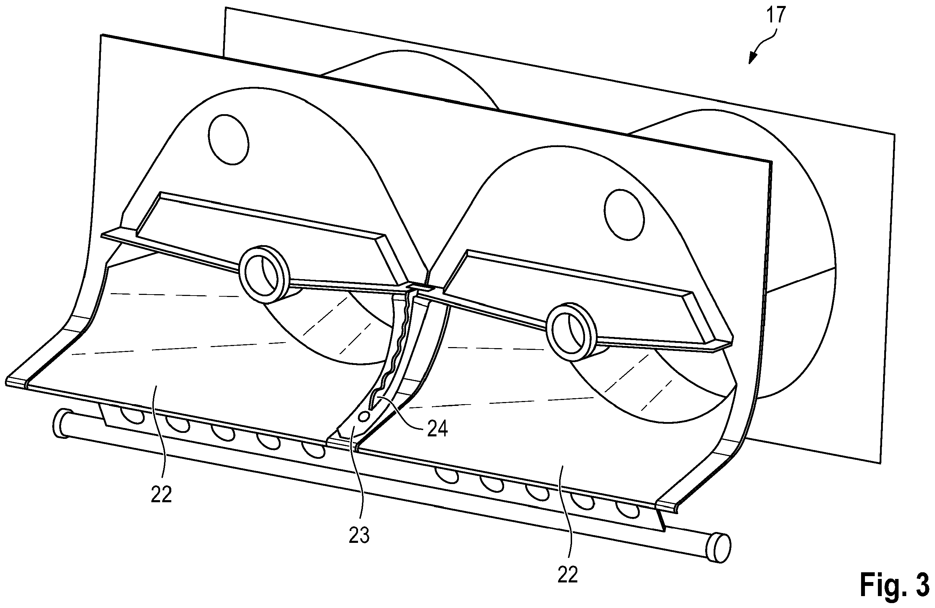

In Fig. 2 ist eine isometrische Ansicht des Einlaufkopfgehäuse 17 der Abscheidevorrichtung dargestellt. Dabei zeigt Fig. 2 das Einlaufkopfgehäuse 17 mit der vorgeordneten Zuführtrommel, die in Rotationsrichtung DR um eine Achse 25 rotiert. Die Darstellung in Fig. 3 zeigt eine isometrische Ansicht des Einlaufkopfgehäuse 17 ohne die Zuführtrommel 5. Das Einlaufkopfgehäuse 17 weist jeweils einen sich über die Breite des entsprechenden Axialabscheiderotors 8 erstreckenden flächigen Einlaufabschnitt 22 auf, welcher abschnittsweise unterhalb der Zuführtrommel 5 verläuft. Zwischen den beiden Einlaufabschnitten 21 befindet sich ein rampenförmiger Gehäuseabschnitt 23. Der rampenförmige Gehäuseabschnitt 23 weist ein im Wesentlichen konkaves Profil auf, und erstreckt sich abschnittsweise in Umgangsrichtung der Zuführtrommel 5. Auf dem Gehäuseabschnitt 23 ist ein im Wesentlichen klingenförmiges Trennelement 24 angeordnet. Das Trennelement 24 erstreckt sich im Wesentlichen in Längsrichtung des Gehäuseabschnitts 23, wobei dessen Kontur im Wesentlichen der des Gehäuseabschnittes 23 entspricht. Das Trennelement 24 ist vorzugsweise lösbar an dem Gehäuseabschnitt 23 angeordnet, so dass eine einfache Auswechselbarkeit, beispielsweise aufgrund von Verschleiß oder zur Anpassung an unterschiedliche Erntegutarten, möglich ist. Hierzu kann das Trennelement 24 an dem Einlaufkopfgehäuse 17 angeschraubt sein.

Die Zuführtrommel 5 ist im Bereich des rampenförmigen Gehäuseabschnittes 23 mit mehreren in Umfangsrichtung hintereinander angeordneten Trennelementen 27 versehen. Hierzu weist die Zuführtrommel 5 weist in ihrem Mittenbereich V-förmig angeordnete oder ausgebildete Leitbleche 26 auf. Die Leitbleche 26 sind in Umfangsrichtung der Zuführtrommel 5 gesehen hintereinander angeordnet und erstrecken sich von der Mantelfläche der Zuführtrommel 5 ausgehend in radialer Richtung nach außen. An den Außenseiten der Leitbleche 26 sind die Trennelemente 27 angeordnet. Das Trennelement 24 wirkt mit den Trennelementen 27 der rotierenden Zuführtrommel 5 zusammen, um Erntegut zu trennen und zu zerteilen. Dabei stellt das feststehende Trennelement 24 eine Art Gegenmesser für die Trennmesser 27 an den Leitblechen 26 der Zuführtrommel 5 dar.

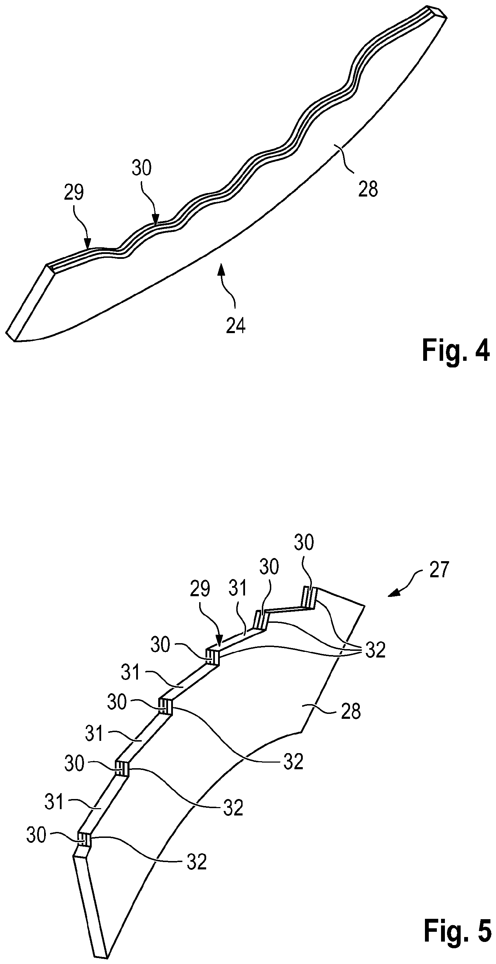

Fig. 4 zeigt schematisch eine perspektivische Ansicht des Trennelements 24. Das Trennelement 24 weist eine gekrümmte Form auf, die mit dem Verlauf des rampenförmigen Gehäuseabschnitt 23, auf welchem das Trennelement 24 befestigt wird, im Wesentlichen korrespondiert. Das Trennelement 24 weist einen Grundkörper 28 auf, der sich senkrecht zur Oberfläche des rampenförmigen Gehäuseabschnitts 23 erstreckt. Der Grundkörper 28 weist eine abschnittsweise als Schneide ausgebildete Stirnfläche 29 auf, die auf von der Zuführtrommel 5 zugeführtes Erntegut einwirkt. Der Grundkörper 28 besteht aus einem ersten Material, vorzugsweise aus einem hochfesten Stahl.

Auf der Stirnfläche 29 ist zumindest abschnittsweise eine Beschichtung 30 aus einem zweiten Material angeordnet, die im Wesentlichen mittig in Längsrichtung der Stirnfläche 29 verläuft. Die Aufbringung der Beschichtung 30 erfolgt dabei im Wesentlichen als streifen- oder bandförmiger Abschnitt, dessen Breite geringer als die Gesamtbreite der Stirnfläche 29 ist. Somit bilden sich neben der Beschichtung 30 aus dem zweiten Material benachbarte Abschnitte bzw. Bereiche der Stirnfläche 29 aus, die aus dem ersten Material bestehen. Das zweite Material zeichnet sich gegenüber dem ersten Material durch eine höhere Verschleißfestigkeit aus. Das zweite Material ist ein Metallmatrix-Verbundwerkstoff. Das Aufbringen der Beschichtung 30 aus dem zweiten Material erfolgt durch Auftragschweißen, insbesondere durch Laserauftragschweißen.

Die Stirnfläche 29 weist ein im Wesentlichen wellenförmiges Profil auf. Die Stirnfläche 29 kann auch mit einem sägezahnförmigen Profil ausgeführt sein. In dem dargestellten Ausführungsbeispiel erstreckt sich die Beschichtung 30 vollständig in Längsrichtung des Trennelementes 24 über dessen Stirnfläche 29. Hierdurch wird erreicht, dass im laufenden Betrieb der Abscheidevorrichtung 6 die zu der Beschichtung 30 benachbarten Abschnitte bzw. Bereiche der Stirnfläche 29, die aus dem ersten Material bestehen, einem größeren Verschleiß ausgesetzt sind, d.h. stärker abgeschliffen werden. Daraus resultiert der Effekt einer symmetrischen, selbstschärfenden Schneidengeometrie.

In Fig. 5 schematisch eine perspektivische Ansicht einer Ausführungsform des an der Zuführtrommel 5 angeordneten Trennelements 27 dargestellt. Der prinzipielle Aufbau des an der Zuführtrommel 5 angeordneten Trennelements 27 entspricht im Wesentlichen dem des auf dem rampenförmigen Gehäuseabschnitt angeordneten Trennelementes 24, so dass für funktionsgleiche Elemente die Bezugszeichen gleich sind. Das Trennelement 27 weist ebenfalls eine gekrümmte Form auf. Das Trennelement 27 weist eine als Schneide ausgebildete Stirnfläche 29 auf. Die Stirnfläche 29 weit ein im Wesentlichen gezacktes oder stufenförmiges Profil auf, wobei das gezackte oder stufenförmige Profil aus wechselweise in Längsrichtung des Trennelementes 27 verlaufenden, im Wesentlichen horizontalen Abschnitten 31 und sich senkrecht hierzu erstreckenden vertikalen Abschnitten 32 gebildet ist. Am Anfang des Profils des Trennelementes 27 befindet sich stets ein vertikaler Abschnitt 32.

Im Gegensatz zu dem Trennelement 24 erfolgt bei dem Trennelement 27 gemäß der in Fig. 5 dargestellten Ausführungsform das Aufbringen der Beschichtung 30 lediglich im Bereich der vertikalen Abschnitte 32. Die vertikalen Abschnitte 32 erstrecken sich radial zur Mantelfläche der Zuführtrommel 5. Das Aufbringen der Beschichtung 30 nur auf den vertikalen Abschnitte 32 des Trennelements 27, welche entsprechend der Rotationsrichtung DR der Zuführtrommel 5 mit dem zu fördernden Erntegutstrom trennend oder schneidend in Eingriff gebracht werden, so dass diese dem größten Verschleiß ausgesetzt sind, kann für eine erhöhte Standzeit ausreichen.

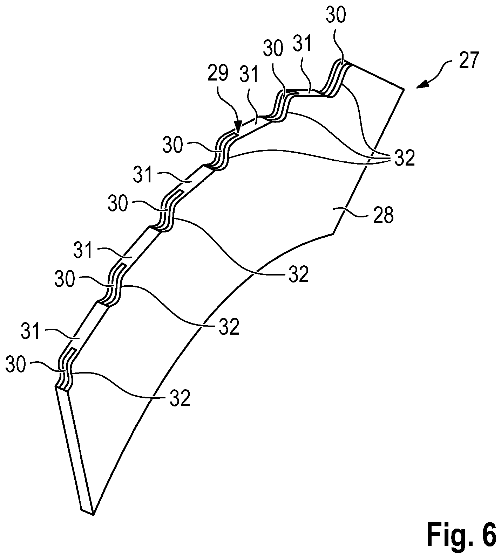

Fig. 6 zeigt schematisch eine perspektivische Ansicht einer weiteren Ausführungsform des Trennelements 27 gemäß Fig. 5. Dabei ist vorgesehen, dass sich die Beschichtung 30 zum einen über den jeweiligen vertikalen Abschnitt 32 vollständig und entlang des sich an den jeweiligen vertikalen Abschnitt 32 anschließenden horizontalen Abschnitts 31 abschnittsweise erstreckt. Dabei wird insbesondere im Bereich im und nach dem Übergang zwischen dem vertikalen Abschnitt 32 und dem nachfolgenden horizontalen Abschnitt 31 die Beschichtung 30 aufgebracht.

Prinzipiell ist die Ausgestaltung der Trennelemente 27 der Zuführtrommel 5 gemäß der vorstehend beschriebenen Ausführungsformen auch auf das Trennelement 24 auf dem rampenförmigen Gehäuseabschnitt 23 übertragbar.

**Bezugszeichenliste**

| | | | |
|---|---|---|---|
| 1 | Fördereinrichtung | 31 | Horizontaler Abschnitt |
| 2 | Drescheinrichtung 2 | 32 | Vertikaler Abschnitt |
| 3 | Dreschtrommel | | |
| 4 | Dreschkorb | DR | Rotationsrichtung von 5 |
| 5 | Zuführtrommel | | |
| 6 | Abscheidevorrichtung | | |
| 7 | Gehäuse | | |
| 8 | Axialabscheiderotor | | |
| 9 | Rippen | | |
| 10 | Abscheidekorb | | |
| 11 | Förderboden | | |
| 12 | Rücklaufboden | | |
| 13 | Rutsche | | |
| 14 | Gebläse | | |
| 15 | Siebboden | | |
| 16 | Leitboden | | |
| 17 | Einlaufkopfgehäuse | | |
| 18 | Wendel | | |
| 19 | Förderschnecke | | |
| 20 | Mähdrescher | | |
| 21 | Häcksel- und Verteilvorrichtung | | |
| 22 | Einlaufabschnitt | | |
| 23 | Gehäuseabschnitt | | |
| 24 | Trennelement | | |
| 25 | Achse | | |
| 26 | Leitblech | | |
| 27 | Trennelement | | |
| 28 | Grundkörper | | |
| 29 | Stirnfläche | | |
| 30 | Beschichtung | | |

## Patentansprüche

1. Abscheidevorrichtung (6), umfassend ein Einlaufkopfgehäuse (17), eine Zuführtrommel (5) sowie zwei Axialabscheiderotoren (8), die mit einem Ende abschnittsweise in das Einlaufkopfgehäuse (17) hineinragen, wobei das Einlaufkopfgehäuse (17) jeweils einen sich über die Breite des jeweiligen Axialabscheiderotors (8) erstreckenden flächigen Einlaufabschnitt (22) aufweist, zwischen denen ein rampenförmiger, sich achsparallel zur Förderrichtung der Axialabscheiderotoren (8) erstreckender Gehäuseabschnitt (23) angeordnet ist, welcher eine Aufteilung eines von der Zuführtrommel (5) zugeführten Erntegutstromes in den Axialabscheiderotoren (8) zuzuführende Teilströme unterstützt, wobei dem rampenförmigen Gehäuseabschnitt (23) zumindest ein aus zumindest einem ersten Material bestehendes Trennelement (24) zugeordnet ist, **dadurch gekennzeichnet, dass** das zumindest eine Trennelement (24) einen Grundkörper (28), der sich senkrecht zur Oberfläche des Gehäuseabschnitts (23) erstreckt, und eine abschnittsweise als Schneide ausgebildete Stirnfläche (29) aufweist, wobei auf der Stirnfläche (29) zumindest abschnittsweise eine Beschichtung (30) aus einem verschleißfesteren zweiten Material angeordnet ist, die im Wesentlichen mittig in Längsrichtung der Stirnfläche (29) verläuft.

2. Abscheidevorrichtung (6) nach Anspruch 1, **dadurch gekennzeichnet, dass** das erste Material ein hochfester Stahl ist und das zweite Material ein Metallmatrix-Verbundwerkstoff.

3. Abscheidevorrichtung (6) nach Anspruch 1 oder 2, **dadurch gekennzeichnet, dass** das Aufbringen der Beschichtung (30) mittels Auftragsschweißen erfolgt.

4. Abscheidevorrichtung (6) nach einem der Ansprüche 1 bis 3, **dadurch gekennzeichnet, dass** die Stirnfläche (29) ein im Wesentlichen wellenförmiges Profil oder ein sägezahnförmiges Profil aufweist.

5. Abscheidevorrichtung (6) nach Anspruch 4, **dadurch gekennzeichnet, dass** sich die Beschichtung (30) über die gesamte Längsausdehnung der Stirnfläche (29) erstreckt.

6. Abscheidevorrichtung (6) nach einem der Ansprüche 1 bis 3, **dadurch gekennzeichnet, dass** die Stirnfläche (29) ein im Wesentlichen gezacktes Profil aufweist, wobei das gezackte Profil aus wechselweise in Längsrichtung des Trennelementes (24) verlaufenden im Wesentlichen horizontalen Abschnitten (31) und im Wesentlichen senkrecht hierzu erstreckenden Abschnitten (32) gebildet ist.

7. Abscheidevorrichtung (6) nach Anspruch 6, **dadurch gekennzeichnet, dass** die Beschichtung (30) nur auf den sich im Wesentlichen senkrecht zu den horizontalen Abschnitten (31) erstreckenden vertikalen Abschnitten (32) aufgebracht ist.

8. Abscheidevorrichtung (6) nach einem der vorangehenden Ansprüche, **dadurch gekennzeichnet, dass** die Zuführtrommel (5) im Bereich des rampenförmigen Gehäuseabschnittes (23) mit mehreren in Umfangsrichtung hintereinander angeordneten Trennelementen (27) versehen ist.

9. Abscheidevorrichtung (6) nach Anspruch 8, **dadurch gekennzeichnet, dass** jeweils zwei Trennelemente (27) der Zuführtrommel (5) paarweise nebeneinander angeordnet sind, wobei die Trennelemente (27) eines Paares in Rotationsrichtung (DR) der Zuführtrommel (5) aufeinander zulaufend angeordnet sind.

10. Mähdrescher (20) mit einer Abscheidevorrichtung (6), **dadurch gekennzeichnet, dass** die Abscheidevorrichtung (6) nach einem der vorangehenden Ansprüche ausgeführt ist.

## Claims

1. A separating device (6) comprising an intake head housing (17), a feed drum (5), as well as two axial separating rotors (8), sections of one end of which protrude into the intake head housing (17), wherein the intake head housing (17) has a flat intake section (22) which in each case extends over the width of the respective axial separating rotor (8) between which a ramp-shaped housing section (23) extending axially parallel to the conveying direction of the axial separating rotors (8) is disposed, which assists in dividing a flow of harvested material which is fed from the feed drum (5) into sub-flows to be fed to the axial separating rotors (8), wherein at least one separating element (24) consisting of at least a first material is associated with the ramp-shaped housing section (23), **characterized in that** the at least one separating element (24) has a main body (28), which extends perpendicular to the surface of the housing section (23), and has an end face (29) which is formed as a cutting edge at least in sections, wherein a coating (30) produced from a more wear-resistant second material is disposed on at least sections of the end face (29) and extends substantially centrally in the longitudinal direction of the end face (29).

2. The separating device (6) according to claim 1, **characterized in that** the first material is a high-strength steel and the second material is a metal matrix composite material.

3. The separating device (6) according to claim 1 or claim 2, **characterized in that** the coating (30) is applied by means of build-up welding.

4. The separating device (6) according to one of claims 1 to 3, **characterized in that** the end face (29) has a substantially undulating profile or a sawtooth-shaped profile.

5. The separating device (6) according to claim 4, **characterized in that** the coating (30) extends over the entire longitudinal extent of the end face (29).

6. The separating device (6) according to one of claims 1 to 3, **characterized in that** the end face (29) has a substantially serrated profile, wherein the serrated profile is formed from substantially horizontal sections (31) which run in the longitudinal direction of the separating element (24) and which alternate with sections (32) extending substantially perpendicular to the horizontal sections.

7. The separating device (6) according to claim 6, **characterized in that** the coating (30) is applied only to the vertical sections (32) which extend substantially perpendicular to the horizontal sections (31).

8. The separating device (6) according to one of the preceding claims, **characterized in that** in the region of the ramp-shaped housing section (23), the feed drum (5) is provided with a plurality of separating elements (27) which are disposed one behind the other in the circumferential direction.

9. The separating device (6) according to claim 8, **characterized in that** two respective separating elements (27) of the feed drum (5) are disposed in pairs adjacent to one another, wherein the separating elements (27) of a pair are disposed so as to converge towards one another in the direction of rotation (DR) of the feed drum (5).

10. A combine harvester (20) with a separating device (6), **characterized in that** the separating device (6) is configured in accordance with one of the preceding claims.

## Revendications

1. Dispositif de séparation (6), incluant un carter de tête d'alimentation (17), un tambour d'alimentation (5) ainsi que deux rotors de séparation axiaux (8) qui, par une extrémité, pénètrent par portions dans le carter de tête d'alimentation (17), le carter de tête d'alimentation (17) comportant respectivement une portion d'entrée plate (22) s'étendant sur la largeur du rotor de séparation axial respectif (8), entre lesquels est disposée une portion de carter en forme de rampe (23) qui s'étend de manière parallèle axialement à la direction de convoyage des rotors de séparation axiaux (8) et qui favorise une division d'un flux de produit récolté amené par le tambour d'alimentation (5) en flux partiels à amener aux rotors de séparation axiaux (8), à la portion de carter en forme de rampe (23) étant associé au moins un élément séparateur (24) constitué d'au moins un premier matériau, **caractérisé en ce que** le au moins un élément séparateur (24) comporte un corps de base (28), qui s'étend perpendiculairement à la surface supérieure de la portion de carter (23), et une surface frontale (29) conformée par portions en couteau, sur la surface frontale (29) étant disposé au moins par portions un revêtement (30) en un second matériau plus résistant à l'usure qui s'étend sensiblement au centre dans la direction longitudinale de la surface frontale (29) .

2. Dispositif de séparation (6) selon la revendication 1, **caractérisé en ce que** le premier matériau est un acier à résistance élevée et le second matériau, un matériau composite à matrice métallique.

3. Dispositif de séparation (6) selon la revendication 1 ou 2, **caractérisé en ce que** l'application du revêtement (30) s'effectue au moyen d'un rechargement par soudure.

4. Dispositif de séparation (6) selon une des revendications 1 à 3, **caractérisé en ce que** la surface frontale (29) présente un profil sensiblement ondulé ou un profil en dents de scie.

5. Dispositif de séparation (6) selon la revendication 4, **caractérisé en ce que** le revêtement (30) s'étend sur toute l'extension longitudinale de la surface frontale (29).

6. Dispositif de séparation (6) selon une des revendications 1 à 3, **caractérisé en ce que** la surface frontale (29) présente un profil sensiblement dentelé, le profil dentelé étant formé par des portions sensiblement horizontales (31) s'étendant en alternance dans la direction longitudinale de l'élément séparateur (24) et par des portions (32) s'étendant sensiblement perpendiculairement à celles-ci.

7. Dispositif de séparation (6) selon la revendication 6, **caractérisé en ce que** le revêtement (30) n'est appliqué que sur les portions verticales (32) s'étendant sensiblement perpendiculairement aux portions horizontales (31) .

8. Dispositif de séparation (6) selon une des revendications précédentes, **caractérisé en ce que** le tambour d'alimentation (5) est muni, dans la zone de la portion de carter en forme de rampe (23), de plusieurs éléments séparateurs (27) disposés les uns derrière les autres dans la direction circonférentielle.

9. Dispositif de séparation (6) selon la revendication 8, **caractérisé en ce que** deux éléments séparateurs (27) du tambour d'alimentation (5) sont respectivement disposés l'un à côté de l'autre par paires, les éléments séparateurs (27) d'une paire étant disposés de manière à converger l'un vers l'autre dans le sens de rotation (DR) du tambour d'alimentation (5).

10. Moissonneuse-batteuse (20) comprenant un dispositif séparateur (6), **caractérisée en ce que** le dispositif séparateur (6) est conformé selon une des revendications précédentes.
